# EUROPEAN PATENT SPECIFICATION

(11) **EP 2 390 595 B1**
(45) Date of publication and mention of the grant of the patent: **25.11.2015**
(21) Application number: 10006787.5
(22) Date of filing: 01.07.2010
(51) Int. Cl.: F24J 2/07, F24J 2/50

(54) **Closed concentrated solar radiation assembly**
Geschlossene Anordnung für konzentrierte Solareinstrahlung
Dispositif fermé à rayonnement solaire concentré

(30) Priority: 29.03.2010 US 748660
(43) Date of publication of application: 30.11.2011
(73) Proprietor: Intevep SA, Caracas 1010 A (VE); CENTRO DE INVESTIGACIONES ENERGETICAS MEDIOAMBIENTALES Y TECNOLOGICAS (C.I.E.M.A.T.), 28040 Madrid (ES); ETHZ (Swiss Federal Institute of Technology), 8092 Zürich (CH)
(72) Inventor: Denk, Thorsten, SN, Tabernas, Provincia de Almeria (ES); Zacarias, Luis, San Antonio, Edo.Miranda (VE); Steinfeld, Aldo, 5200 Brugg (CH)
(74) Representative: Behrmann, Niels

(56) References cited:
- DE-B3-102004 026 517
- US-A- 2 996 845
- US-A- 4 164 123
- US-A- 4 203 487
- US-A- 4 458 745

## Description

### BACKGROUND OF THE INVENTION

This invention relates to a closed central assembly for concentrated solar radiation having a refrigerated window, US 4,164,123, concerning the general technical backround, discloses a solar thermal electric energy system utilizing a solar receptor having a glass window with cooling liquid circulating there trough.

Concentrated solar power systems focus direct solar radiation through optical devices onto an area where a assembly is located. The assembly transforms the radiation into heat. Since concentrated solar power systems produce both heat and electricity, they can replace all or part of the energy requirements in some industrial applications. On the small scale, they also have durability and low operating costs.

Various solar energy collection arrangements are known. Many utilize an assembly with a receiver located at the focus. The receiver or central solar radiation assembly absorbs concentrated sunlight at high temperatures, commonly about 700°-1500° C. and transfers the heat generated by the solar absorber to a working fluid, which either serves as a heat carrier fluid or is designed to perform a thermochemical process. In one known kind of central solar assembly, a so-called tubular assembly, the working fluid flows inside tubes located usually near the inner periphery of the solar assembly housing. In such a assembly, solar radiation is absorbed at the outer surface of the tubes and is transmitted as heat to the working fluid, which is thus heated. The overall resistance to heat transfer and the ensuing heat loss in such tubular central solar assemblys is relatively high.

High temperature closed solar assemblies generally have a cylindrical housing. Closed solar assemblies are closed at one side by a transparent window to form a sealed recipient capable of holding a working fluid or a chemical reaction mixture in direct contact with the absorber while avoiding physical contact between the working fluid and the ambient air. The sealed recipient also protects against temperature loss.
In operation, the working fluid or reaction mixture is forced to flow across the assembly chamber whereby heat is transferred from the absorber to the fluid and is utilized for the chemical reaction or is transported outside the assembly.

The transparent window that shields the absorber in a solar assembly must be capable of sustaining the extreme conditions of high solar flux, high temperature and in some applications pressure associated with the conditions of operation. Solar assemblies designed for large-scale solar energy conversion systems need large transparent windows. These windows with the necessary dimensions and the required optical/thermo mechanical qualities are not readily available. Since large pieces must be made to order and the requirements concerning mechanical stability increase with size, these windows are extremely expensive or even impossible to manufacture. As a result, there is a need for improved large-scale solar assembly windows and large-scale concentrated solar power systems.

### SUMMARY OF THE INVENTION

The primary object of the present invention is the creation of a closed concentrated solar radiation assembly having a window assembly that fulfills the requirements of a large central assembly in terms of efficiency, thermal and mechanical loads.

In accordance with the present invention, a closed concentrated solar radiation assembly of claim 1 is disclosed. The concentrated solar radiation assembly comprises a housing divided into segments by housing trusses; window blocks positioned within the segments supported by the housing trusses; and, internal trusses positioned on top of the window blocks and within the segments. The housing trusses and internal trusses are hollow and define cooling channels for flow of cooling liquid, such as water or the like.

### BRIEF DESCRIPTION OF THE DRAWINGS

A detailed description of preferred embodiments of the present invention follows, with reference to the attached drawings, wherein:
Figure 1 illustratively depicts a non-limiting example of the individual components of the concentrated solar radiation assembly as claimed.
Figure 2 illustratively depicts a non-limiting example of the outside, solar radiation side, of the assembled concentrated solar radiation assembly as claimed.
Figure 3 illustratively depicts a non-limiting example of the inside liquid flow of the concentrated solar radiation assembly as claimed.
Figure 4 illustratively depicts a non-limiting example an assembly/structure fluid side, of the assembled concentrated solar radiation assembly as claimed.
Figure 5 illustratively depicts a non-limiting example of the hermetic seal of the assembly/structure as claimed.

### DETAILED DESCRIPTION

The invention relates to a large-scale concentrated solar radiation assembly having a refrigerated window. The window is divided into several segments that are shaped to keep the assembly hermetically sealed. The hermetically sealed assembly, including the window, is able to withstand thermal and mechanical loads caused by the highly concentrated solar radiation, very high temperatures, and the pressure difference between the interior and the exterior. Outside trusses define the shape of the window segments. Window segments are held within the segments by a housing and the outside trusses. The outside trusses apply the force needed to hermetically seal the assembly. In addition, the outside trusses are shaped to resist mechanical load and are water cooled to resist thermal load.

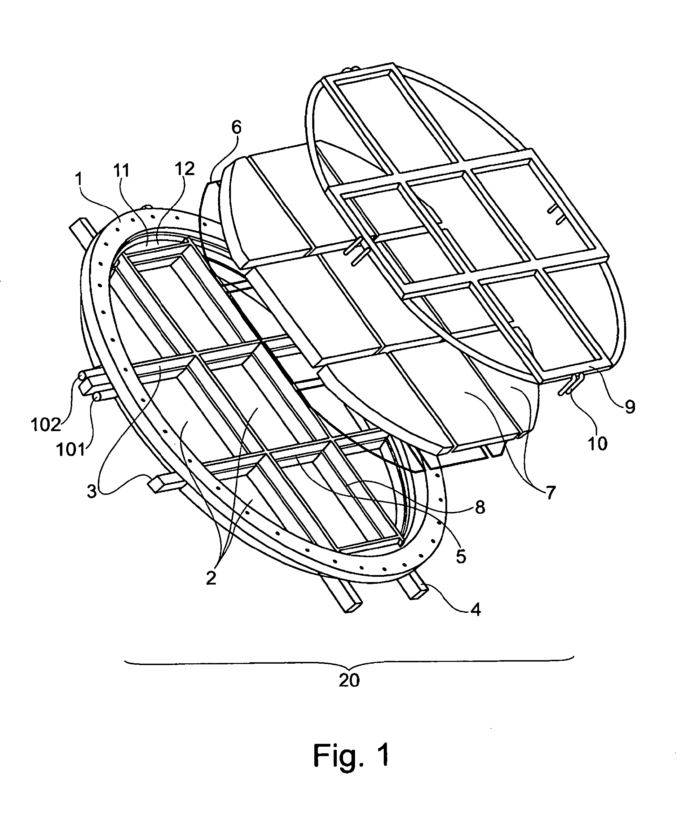

FIG. 1 depicts a non-limiting embodiment of the present invention. FIG. 1 shows an exploded view of a large-scale segmented refrigerated or water-cooled window assembly **20** for highly concentrated solar radiation. Solar radiation enters from the left of assembly **20** and the structure is on the right of assembly **20**. The window for a large-scale concentrated solar radiation assembly or structure is divided into several segmented window blocks **7**, which can be made of glass, such as quartz glass, or other suitable materials that are well known within the art. Large-scale as used herein may be defined as an assembly having a window where size makes durability of the window assembly an issue, for example, where the window diameter or similar dimension is larger than about 400 mm. In order to withstand the unavoidable mechanical loads and to solve the fabrication problems associated with larger sizes, the window is divided into several segments that are refrigerated by liquid cooled trusses.

High mechanical load as defined herein is a function of pressure difference and temperature level. Pressure differences of 2 bar, such as from ambient (1 bar) to 3 bar is considered a high mechanical pressure load. Temperature above about 1000 °C is considered high mechanical temperature load. The mechanical pressure and temperature load can be increased up to an unknown limit by reducing the spacing between the trusses and/or increasing the thickness of the trusses and glass-blocks. In theory, the window blocks of the solar radiation assembly of the present invention can handle mechanical loads that reach beyond the practical limitations of the window blocks, i.e. window blocks as big as football fields may be manufactured to withstand high mechanical loads; however depending upon their intended use, window blocks of such size may not be practical.

Continuing on FIG. 1, the window blocks **7** are supported by outer trusses shown here as horizontal and vertical housing trusses **3**. The horizontal and vertical orientation of the housing trusses **3** helps to sustain mechanical load possibly caused by the pressurized surface of the windows. An annular liquid-cooled flange **1** is divided into segments **2** by the housing trusses **3**. A cooling liquid enters the housing trusses **3** through housing truss liquid inlets **4**. The cooling liquid, such as water, may be any liquid that is well known within the art.

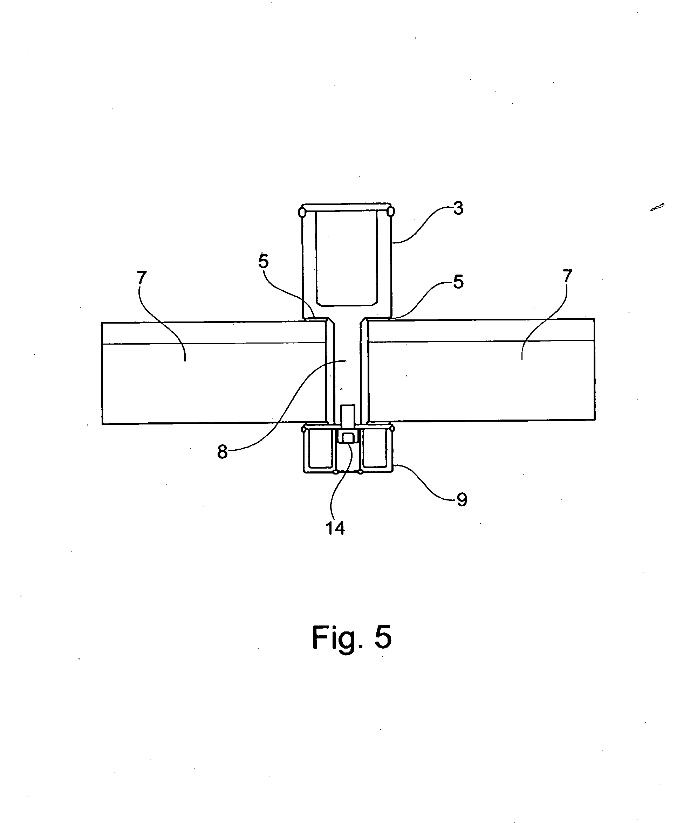

The housing trusses **3** are shaped to include a support surface **5**. The support surface **5** supports the window gaskets **6**, the window blocks **7** and an upstanding rib **8.** Upstanding rib **8** provides support for the internal trusses **9** and spacing for the window blocks **7**. The internal trusses **9** are connected to the rib **8** of the external trusses **3** with countersunk screws **14**. As shown in Figure 5, the window blocks **7** are captured between support surface **5** of the housing trusses **3** on one side and internal trusses **9** on the other side. The countersunk screw **14** into upstanding rib **8** applies sufficient force between housing truss **3** and internal truss **9** to hermetically seal the window **7**. The hermetic seal is also effectuated by a soft ceramic material (not shown) between inner truss **9** and window block **7**. The soft ceramic material equalizes the pressure on the window blocks **7** exerted by the support surface **5.** The soft ceramic material may be any soft ceramic that is well known within the art, such as ceramic fabric.

Attached to the internal trusses **9** are liquid inlets **10**. The liquid inlets **10** of the internal trusses **9** are connected to liquid inlet holes **11** in flange plate **12**. Housing truss liquid inlets **4** and flange plate liquid inlets **11** allow a cooling liquid to flow through the hollow housing trusses **3** and hollow internal trusses **9**. The advantageously orientated trusses are thus cooled by liquid flow. The cooled trusses are able to withstand the increased thermal load and temperature caused by the highly concentrated solar radiation.

The solar radiation assembly of the present invention may incorporate varying geometries. The differing assembly components, including window segments as detailed above, may have differing shapes, sizes and/or orientation. For example, the window segments can be round, square, rectangular and hexagonal. The corresponding internal and external trusses may be orientated around the shape of the window segments.
Further, the window segments of the solar radiation assembly of the present invention can be used in large-scale systems as described above, and also in small-scale systems. The accompanying figures and detailed disclosure are in no way limiting to the geometries of the components that, as assembled, complete the solar radiation assembly and/or structure of the present invention.

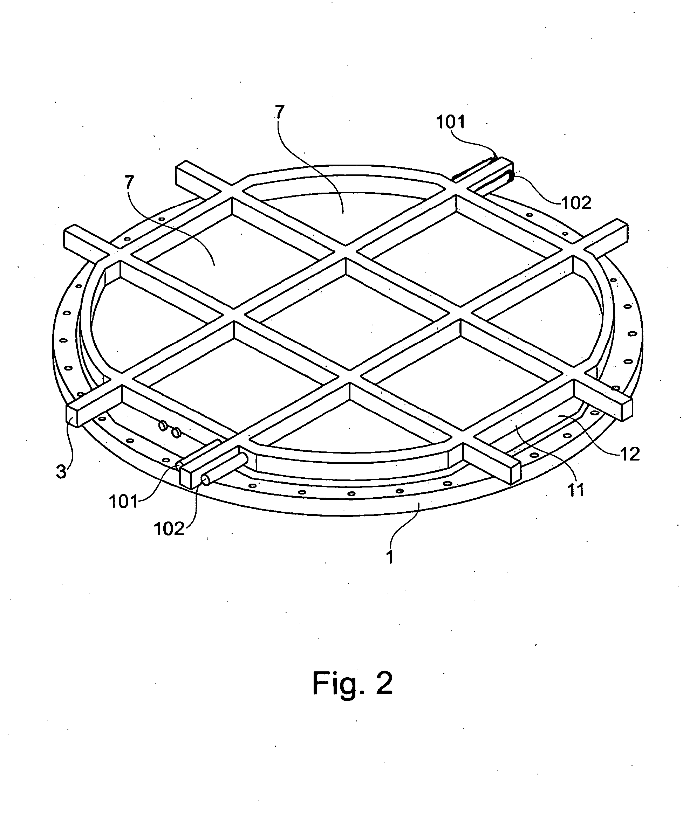

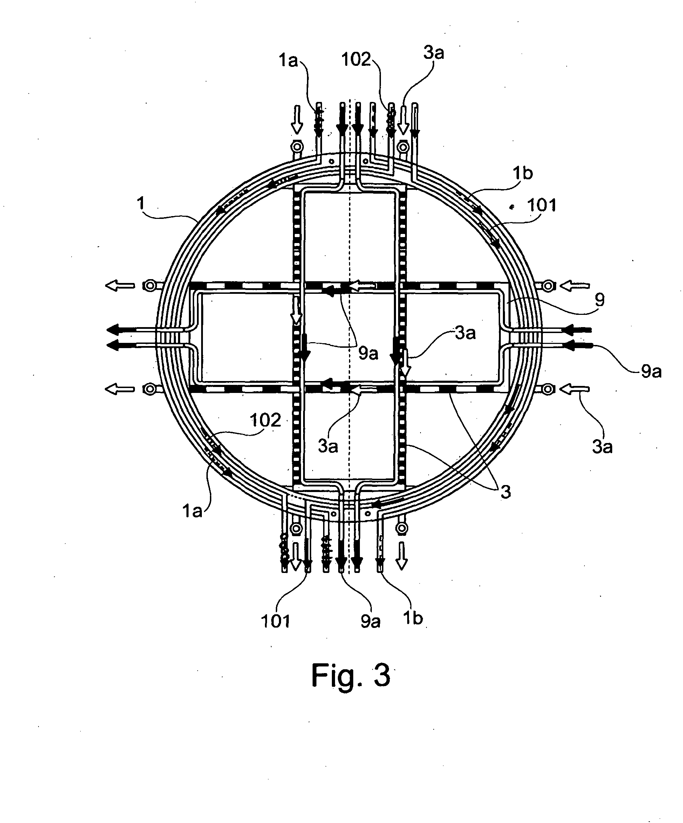

Figure 2 illustratively depicts a non-limiting example of the outside, solar radiation side, of the assembled concentrated solar radiation assembly. This side of the assembly is exposed to solar radiation, i.e. sunlight, which is collected through the window segments **7.** As depicted in Figures 2 and 3, there are a total of twelve cooling water flows: one (**3a**) through each of the four outer trusses **3**; one (**9a**) through each of the four inner trusses **9**; there are two through the flange **1** wherein one (**1a**) flows through the upper half of flange **1** and one (**1b**) flows through the lower half of flange **1**; and finally, two (**101** & **102**) flow through the curved outer trusses welded to flange **1**.

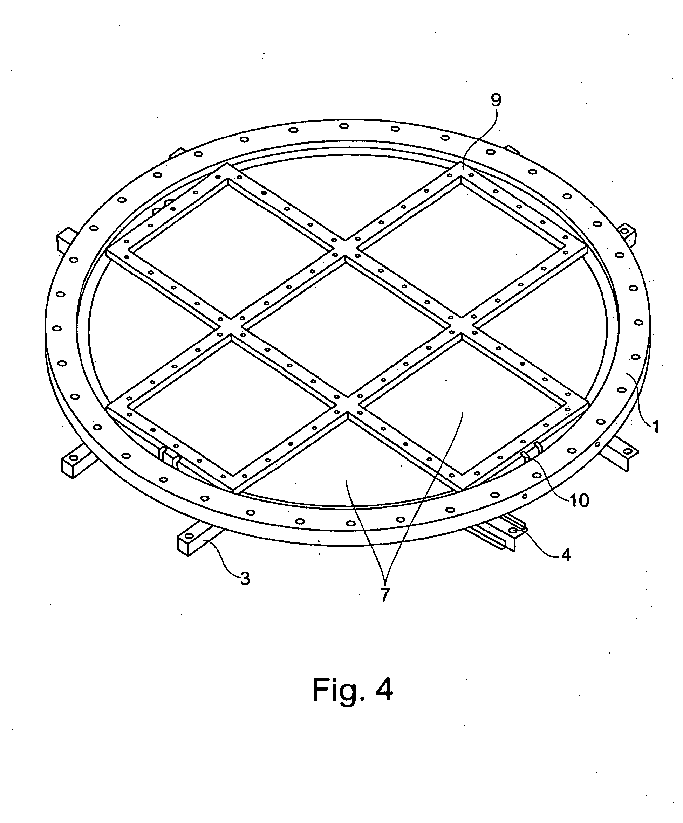

Figure 4 illustratively depicts a non-limiting example of the inside, assembly/structure fluid side, of the assembled concentrated solar radiation assembly. This side of the assembly is not exposed to direct solar radiation. This side is exposed to heat from the inside of the assembly.

The segmented refrigerated windows of the solar radiation assembly of the present invention may be pieced together into an inexpensive large-scale solar energy conversion system.

The resultant segmented refrigerated window for large-scale solar assemblies may be installed by any method, which is well known within the art. The solar assemblies of the present invention are designed for large-scale solar energy conversion systems; however, they may also be employed in small-scale solar energy conversion systems. The segmented hermetically sealed refrigerated windows may be created in an unlimited amount of necessary dimensions. The shapes of the components illustrated in FIGS. 1-4 are the preferred embodiments of the present invention; however, regardless of the size or shape, the solar assembly of the present invention is able to withstand the optical load, thermal load and mechanical load needed for large-scale concentrated solar radiation receiver systems.

The large-scale concentrated solar radiation assembly and of the present invention may be implemented in other possible applications. The final physical and chemical characteristics of the solar radiation assembly of the present invention may be applied to conventional energy technology, renewable energy technology, industrial heat process technology, conventional cementing technology, thermo chemical process technology, and any application that may benefit from the energy or heat generating properties of the present invention.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications, which are within its scope as defined by the claims.

## Claims

1. A closed concentrated solar radiation assembly comprising:
a recipient capable of holding a working fluid or a chemical reaction mixture,
a window assembly (20) for closing said recipient, **characterized in that** the window assembly (20) comprises:
a housing divided into segments (2) by hollow housing trusses (3);
window blocks (7) positioned within the segments (2) supported by the housing trusses (3);
hollow internal trusses (9) positioned on top of the window blocks (7) and inside the segments (2), wherein the hollow housing trusses (3) and the internal trusses (9) define cooling flow paths for cooling the window assembly (20); and
housing truss liquid inlets (4) and liquid inlets (10)attached to the internal trusses (9) for allowing a cooling liquid to flow trough the hollow housing trusses (3) and the hollow internal trusses (9).

2. The closed concentrated solar radiation assembly of claim 1, wherein the assembly is hermetically sealed.

3. The closed concentrated solar radiation assembly of claim 1, wherein the housing comprises an outer annular flange for mounting closed to the solar radiation assembly.

4. The closed concentrated solar radiation assembly of claim 1, wherein the housing trusses (3) extend across the housing and intersect each other.

5. The closed concentrated solar radiation assembly of claim 1, wherein the shape of the housing trusses (3) withstands high mechanical load.

6. The closed concentrated solar radiation assembly of claim 1, wherein the housing trusses (3) are shaped to support the internal trusses and fix the internal trusses (9) in place.

7. The closed concentrated solar radiation assembly of claim 1, wherein the shape of the window segments is selected from the group consisting of round, square, rectangular, hexagonal or combinations thereof.

8. The closed concentrated solar radiation assembly of claim 1, wherein the flow paths are in a longitudinal direction.

9. The closed concentrated solar radiation assembly of claim 1, further comprising gaskets (6) supported by the housing trusses (3) positioned between the housing trusses and the window blocks (7).

10. The closed concentrated solar radiation assembly of claim 1, further comprising soft ceramic material supported by the inner trusses positioned between the inner trusses and the window blocks.

11. The closed concentrated solar radiation assembly of claim 1, wherein the internal trusses (9)are connected to the housing with countersunk connecting screws (14).

12. The closed concentrated solar radiation assembly of claim 1, wherein the window has a dimension greater than or equal to 400 mm.

13. The closed concentrated solar radiation assembly of claim 1, wherein the window blocks (7) are quartz glass.

## Patentansprüche

1. Geschlossene Anordnung für konzentrierte Solareinstrahlung, die umfasst:
eine Aufnahmevorrichtung, die ein Arbeitsfluid oder ein chemisches Reaktionsgemisch halten kann,
eine Fensteranordnung (20), um die Aufnahmevorrichtung zu schließen, **dadurch gekennzeichnet, dass** die Fensteranordnung (20) Folgendes umfasst:
ein Gehäuse, das durch hohle Gehäusegitterträger (3) in Segmente (2) unterteilt ist;
Fensterblöcke (7), die innerhalb der Segmente (2) positioniert sind und von den Gehäusegitterträgern (3) getragen werden;
hohle innere Gitterträger (9), die auf der Oberseite der Fensterblöcke (7) und innerhalb der Segmente (2) positioniert sind, wobei die hohlen Gehäusegitterträger (3) und die inneren Gitterträger (9) Fließwege eines Kühlmittels zum Kühlen der Fensteranordnung (20) definieren; und
Flüssigkeitseinlässe (4) des Gehäusegitterträgers und Flüssigkeitseinlässe (10), die an den inneren Gitterträgern (9) befestigt sind, um einer Kühlmittelflüssigkeit zu ermöglichen, durch die hohlen Gehäusegitterträger (3) und durch die hohlen inneren Gitterträger (9) zu fließen.

2. Geschlossene Anordnung für konzentrierte Solareinstrahlung nach Anspruch 1, wobei die Anordnung hermetisch abgedichtet ist.

3. Geschlossene Anordnung für konzentrierte Solareinstrahlung nach Anspruch 1, wobei das Gehäuse einen äußeren ringförmigen Flansch für eine geschlossene Befestigung an der Anordnung für Solareinstrahlung umfasst.

4. Geschlossene Anordnung für konzentrierte Solareinstrahlung nach Anspruch 1, wobei sich die Gehäusegitterträger (3) quer über das Gehäuse erstrecken und sich gegenseitig schneiden.

5. Geschlossene Anordnung für konzentrierte Solareinstrahlung nach Anspruch 1, wobei die Form der Gehäusegitterträger (3) hohen mechanischen Belastungen widersteht.

6. Geschlossene Anordnung für konzentrierte Solareinstrahlung nach Anspruch 1, wobei die Gehäusegitterträger (3) so geformt sind, um die inneren Gitterträger zu tragen und um die inneren Gitterträger (9) fest in Position zu halten.

7. Geschlossene Anordnung für konzentrierte Solareinstrahlung nach Anspruch 1, wobei die Form der Fenstersegmente ausgewählt ist aus der Gruppe, die aus einer runden, quadratischen, rechteckigen, hexagonalen Form oder aus Kombinationen derselben besteht.

8. Geschlossene Anordnung für konzentrierte Solareinstrahlung nach Anspruch 1, wobei die Fließwege in Längsrichtung verlaufen.

9. Geschlossene Anordnung für konzentrierte Solareinstrahlung nach Anspruch 1, die ferner Dichtungen (6) umfasst, die von den Gehäusegitterträgern (3) getragen werden und die zwischen den Gehäusegitterträgern und den Windblöcken (7) positioniert sind.

10. Geschlossene Anordnung für konzentrierte Solareinstrahlung nach Anspruch 1, die ferner ein weiches Keramikmaterial umfasst, das von den inneren Gitterträgern getragen wird und das zwischen den inneren Gitterträgern und den Windblöcken positioniert ist.

11. Geschlossene Anordnung für konzentrierte Solareinstrahlung nach Anspruch 1, wobei die inneren Gitterträger (9) mit dem Gehäuse mit Verbindungssenkschrauben (14) verbunden sind.

12. Geschlossene Anordnung für konzentrierte Solareinstrahlung nach Anspruch 1, wobei das Fenster eine Dimension aufweist, die gleich oder größer als 400 mm ist.

13. Geschlossene Anordnung für konzentrierte Solareinstrahlung nach Anspruch 1, wobei die Fensterblöcke (7) aus Quarzglas sind.

## Revendications

1. Dispositif fermé à rayonnement solaire concentré, comprenant:
un récipient capable de contenir un fluide de travail ou un mélange de réaction chimique,
un ensemble de fenêtre (20) pour fermer ledit récipient,
**caractérisé en ce que**:
l'ensemble de fenêtre (20) comprend:
un boîtier divisé en segments (2) par des entretoises de boîtier creuses (3);
des blocs de fenêtre (7) positionnés à l'intérieur des segments (2) supportés par les entretoises de boîtier (3);
des entretoises internes creuses (9) positionnées au-dessus des blocs de fenêtre (7) et à l'intérieur des segments (2), dans lequel les entretoises de boîtier creuses (3) et les entretoises internes (9) définissent des chemins d'écoulement de refroidissement pour refroidir l'ensemble de fenêtre (20); et
des entrées de liquide d'entretoise de boîtier (4) et des entrées de liquide (10) attachées aux entretoises internes (9) destinées à permettre à un liquide de refroidissement de s'écouler à travers les entretoises de boîtier creuses (3) et les entretoises internes creuses (9).

2. Dispositif fermé à rayonnement solaire concentré selon la revendication 1, dans lequel le dispositif est hermétiquement scellé.

3. Dispositif fermé à rayonnement solaire concentré selon la revendication 1, dans lequel le boîtier comprend une bride annulaire extérieure pour un montage sur le dispositif fermé à rayonnement solaire.

4. Dispositif fermé à rayonnement solaire concentré selon la revendication 1, dans lequel les entretoises de boîtier (3) s'étendent en travers du boîtier et se croisent mutuellement.

5. Dispositif fermé à rayonnement solaire concentré selon la revendication 1, dans lequel la configuration des entretoises de boîtier (3) supporte une charge mécanique élevée.

6. Dispositif fermé à rayonnement solaire concentré selon la revendication 1, dans lequel les entretoises de boîtier (3) sont configurées de manière à supporter les entretoises internes et à fixer les entretoises internes (9) en place.

7. Dispositif fermé à rayonnement solaire concentré selon la revendication 1, dans lequel la configuration des segments de fenêtre est sélectionnée dans le groupe comprenant des formes ronde, carrée, rectangulaire, hexagonale, ou des combinaisons de celles-ci.

8. Dispositif fermé à rayonnement solaire concentré selon la revendication 1, dans lequel les chemins d'écoulement s'étendent dans une direction longitudinale.

9. Dispositif fermé à rayonnement solaire concentré selon la revendication 1, comprenant en outre des garnitures (6) supportées par les entretoises de boîtier (3) positionnées entre les entretoises de boîtier et les blocs de fenêtre (7).

10. Dispositif fermé à rayonnement solaire concentré selon la revendication 1, comprenant en outre un matériau de céramique mou supporté par les entretoises intérieures positionné entre les entretoises intérieures et les blocs de fenêtre.

11. Dispositif fermé à rayonnement solaire concentré selon la revendication 1, dans lequel les entretoises internes (9) sont connectées au boîtier à l'aide de vis de connexion à tête fraisée (14).

12. Dispositif fermé à rayonnement solaire concentré selon la revendication 1, dans lequel la dimension de la fenêtre est supérieure ou égale à 400 mm.

13. Dispositif fermé à rayonnement solaire concentré selon la revendication 1, dans lequel les blocs de fenêtre (7) sont constitués de verre de quartz.
